**Europäisches Patentamt**

**European Patent Office**

**Office européen des brevets**

(11) Numéro de publication : **0 407 493 B1**

(12) **FASCICULE DE BREVET EUROPEEN**

(45) Date de publication du fascicule du brevet :
**30.12.92 Bulletin 92/53**

(21) Numéro de dépôt : **89911567.9**

(22) Date de dépôt : **02.10.89**

(86) Numéro de dépôt international :
**PCT/FR89/00508**

(87) Numéro de publication internationale :
**WO 90/03871 19.04.90 Gazette 90/09**

(51) Int. Cl.⁵ : **B25J 15/06,** B65G 47/91

(54) **PREHENSEUR PNEUMATIQUE.**

(30) Priorité : **03.10.88 FR 8812896**

(43) Date de publication de la demande :
**16.01.91 Bulletin 91/03**

(45) Mention de la délivrance du brevet :
**30.12.92 Bulletin 92/53**

(84) Etats contractants désignés :
**BE DE GB IT**

(56) Documents cités :
**US-A- 4 502 721**

(73) Titulaire : **COGEMA (COMPAGNIE GENERALE DES MATIERES NUCLEAIRES)**
**2, rue Paul Dautier B.P. 4**
**F-78141 Velizy-Villacoublay Cédex (FR)**

(72) Inventeur : **GUYARD, Alain**
**Rue de l'Evêché**
**F-26130 Saint-Paul-Trois-Châteaux (FR)**

(74) Mandataire : **Poulin, Gérard et al**
**Société BREVATOME 25, rue de Ponthieu**
**F-75008 Paris (FR)**

Jouve, 18, rue Saint-Denis, 75001 PARIS

EP 0 407 493 B1

# Description

L'invention concerne un préhenseur pneumatique conçu notamment pour être utilisé sur un automate, voir par exemple US-A-4 502 721.

Les préhenseurs utilisés habituellement sur les automates sont des mécanismes en forme de pinces comportant au moins deux doigts articulés. La préhension d'un objet est effectuée en amenant chacun des doigts en contact avec cet objet et en appliquant sur celui-ci une force suffisante pour permettre sa manutention.

De tels préhenseurs constituent une solution satisfaisante lorsqu'on désire transporter un objet peu fragile. En effet, ils présentent alors l'avantage de permettre la préhension d'objets dont le poids peut être important. De plus, ils permettent d'appliquer un effort sur cet objet lorsque cela est nécessaire, par exemple pour le mettre en place.

Cependant, ces préhenseurs connus présentent de nombreux inconvénients. En premier lieu, lorsque l'objet saisi est fragile, sa préhension à l'aide d'un préhenseur en forme de pince risque de le déformer. De plus, avant d'effectuer la préhension d'un objet, il est nécessaire de positionner avec précision le préhenseur par rapport à cet objet. En outre, les préhenseurs articulés sont des appareils complexes comportant des pièces d'usure et ils sont relativement lourds et onéreux.

L'invention a précisément pour objet un préhenseur conçu pour tranporter des objets fragiles sans risque d'écrasement, ce préhenseur ne nécessitant pas d'être positionné de façon précise par rapport aux objets à saisir et étant de conception particulièrement simple et peu coûteuse puisqu'il ne comporte aucune pièce mobile.

Conformément à l'invention, ce résultat est obtenu au moyen d'un préhenseur pneumatique, qui comprend un support approximativement en forme de U dont une branche d'extrémité porte une buse d'éjection reliée à une source d'air comprimé, caractérisé par le fait que la buse est orientée vers la branche intermédiaire du support, à proximité d'un coude reliant cette branche intermédiaire à l'autre branche d'extrémité du support, ce dernier étant conformé de façon à canaliser l'air comprimé éjecté par la buse vers l'extrémité de l'autre branche d'extrémité.

Dans un préhenseur pneumatique ainsi réalisé, la saisie d'un objet s'effectue grâce aux différences de pression créées par le jet d'air comprimé sortant de la buse. On comprend aisément qu'un tel préhenseur permet de transporter des objets de poids limité sans les endommager lorsqu'ils sont fragiles. De plus, le préhenseur n'a pas besoin d'être positionné de façon précise par rapport à l'objet à saisir car ce dernier est automatiquement attiré lorsque l'arrivée d'air comprimé est ouverte. Enfin, il ne présente aucune pièce mobile, ce qui le rend pratiquement inusable, et il est à la fois léger, peu cher et auto-nettoyant puisque le jet d'air comprimé assurant la préhension nettoie automatiquement la surface active du support.

De préférence, le support comporte une plaque délimitée latéralement, sur sa face tournée vers l'intérieur du U et de part et d'autre du coude, par deux rails de guidage de l'air comprimé éjecté par la buse.

Un mode de réalisation particulier de l'invention va maintenant être décrit, à titre d'exemple non limitatif, en se référant aux dessins annexés dans lesquels :

- la figure 1 est une vue en perspective représentant un préhenseur pneumatique réalisé conformément à l'invention ; et
- les figures 2a et 2b sont des vues de côté du préhenseur de la figure 1 illustrant respectivement l'approche de l'objet à saisir par le préhenseur et l'actionnement de ce dernier permettant le prise de l'objet.

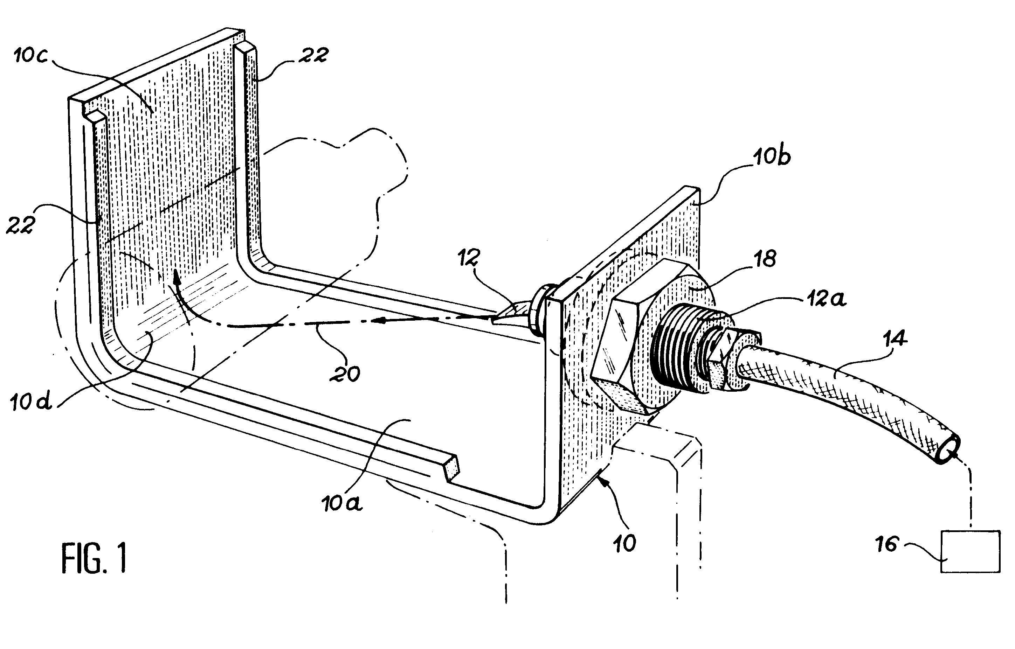

Comme l'illustre la figure 1, le préhenseur pneumatique selon l'invention comporte un support rigide 10 approximativement en forme de U, apte à être monté par exemple à l'extrémité du bras articulé d'un automate. Le support 10 est constitué par une plaque de forme rectangulaire, réalisée par exemple en métal ou en matière plastique, et dont les extrémités sont repliées à 90° environ par rapport à la partie centrale 10a de la plaque, pour former deux branches d'extrémité 10b et 10c.

La branche d'extrémité 10b du support 10 porte une buse d'éjection 12 reliée par un tuyau souple 14 à une source d'air comprimé 16. La buse d'éjection 12 comporte une partie filetée 12a qui traverse un trou formé au centre de la branche 10b du support et elle est fixée sur cette branche par un écrou 18 vissé sur la partie filetée 12a. La fixation de la buse 12 sur la branche 10b du support peut cependant être assurée par tout autre moyen sans sortir du cadre de l'invention.

La buse d'éjection 12 débouche à l'intérieur du U formé par le support 10 et elle est située dans le plan médian de ce dernier et orientée vers un coude 10d formé dans le support 10, à l'intersection des branches 10a et 10c. Plus précisément, le jet d'air comprimé 20 sortant de la buse 12 vient heurter la branche intermédiaire 10a à proximité du coude 10d.

Pour canaliser le jet d'air comprimé 20 sortant de la buse d'éjection 12, le support 10 comporte également deux rails latéraux 22 situés le long des côtés du support 10, sur la face de ce dernier tournée vers l'intérieur du U. Les rails 22 s'étendent de part et d'autre du coude 10d, pratiquement sur toute la longueur de la branche d'extrémité 10c et sur la majeure partie de la longueur de la branche intermédiaire 10a du support. Ils évitent au jet d'air comprimé sortant de la buse d'éjection 12 de s'échapper sur les côtés du support.

Les rails 22 peuvent être réalisés d'une seule pièce avec le support 10, notamment lorsque celui-ci est réalisé en matière plastique moulée. Ils peuvent aussi être rapportés sur la plaque constituant le support 10, par exemple par collage ou par soudure.

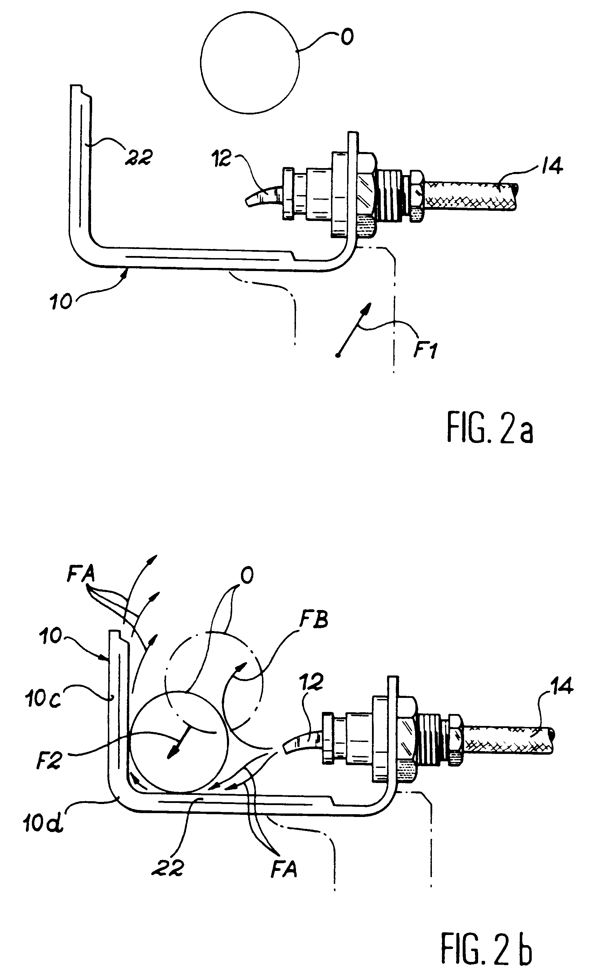

La mise en oeuvre du préhenseur pneumatique qui vient d'être décrit en se référant à la figure 1 va maintenant être décrite en détail en se référant aux figures 2a et 2b.

Pour saisir un objet dont le profil apparaît en 0 sur la figure 2a, on approche le préhenseur pneumatique de cet objet, sans précision particulière, de telle sorte que l'objet se trouve à proximité de la face du support 10 tournée vers l'intérieur du U. Cette opération d'approche est schématisée par la flèche F1 sur la figure 2a. Pendant que le préhenseur est approché de l'objet, l'arrivée d'air comprimé par la buse 12 est interrompue.

Comme on l'a représenté en traits mixtes sur la figure 2b, lorsque l'objet 0 est en partie encerclé par le support 10 en forme de C, l'arrivée d'air comprimé est ouverte de sorte qu'un jet d'air comprimé est éjecté par la buse 12. Compte tenu de l'orientation de cette dernière, l'air comprimé canalisé par les rails 22 suit une trajectoire incurvée au niveau du coude 10d le long de la branche 10c. Une zone en dépression est ainsi créée dans la région contournée par le jet, à proximité du coude 10. L'éjection d'air comprimé par la buse 12 a donc pour effet de plaquer l'objet 0 contre les rails 22 du support à proximité du coude 10d, comme l'illustre la flèche F2 sur la figure 2b.

La position de l'objet 0 lorsqu'il est plaqué contre les rails 22 sous l'effet du jet d'air comprimé émis par la buse 12 est représentée en trait plein sur la figure 2b. Dans cette position, une partie du jet d'air comprimé continue à contourner l'objet 0 entre les rails 22 (flèches FA), alors qu'une autre partie de ce jet vient heurter l'objet pour s'échapper directement hors du support (flèches FB), ce qui a pour effet de favoriser le maintien de l'objet dans le préhenseur. Dans ces conditions, l'objet peut être déplacé en tous sens à l'aide du préhenseur.

En donnant aux dimensions du support 10 et à la pression du jet d'air comprimé des valeurs adaptées aux dimensions et au poids des objets à saisir, on peut utiliser le préhenseur pneumatique selon l'invention pour saisir des objets de dimensions et de poids variés. A titre d'exemple nullement limitatif, la profondeur du support en U 10 peut être d'environ 3 cm et la pression d'arrivée d'air comprimé d'environ 6 bars.

Ainsi, des essais ont montré qu'un préhenseur selon l'invention, présentant les caractéristiques indiquées ci-dessus, permet de soulever et de manipuler des flacons pleins d'un poids supérieur à 100g, des mouchoirs en papier, des bouchons, des plumes d'enregistreur, des écrous, etc.

Le préhenseur pneumatique qui vient d'être décrit permet ainsi de saisir des objets de forme quelconque et de poids limité. De plus, le positionnement du préhenseur par rapport à ces objets n'a pas besoin d'être précis. En outre, étant donné que le préhenseur selon l'invention ne comporte pas de pièce mobile, il est pratiquement inusable et son pilotage peut être réalisé aisément. Ce préhenseur est par ailleurs léger et peu cher et le jet d'air comprimé qui effectue la préhension assure également l'auto-nettoyage du support.

Bien entendu, l'invention n'est pas limitée au mode de réalisation qui vient d'être décrit à titre d'exemple, mais en couvre toutes les variantes. En particulier, la forme du support du préhenseur peut être légèrement différente de la forme décrite. Ainsi, le rayon de la partie incurvée peut être plus grand. Au lieu d'être réalisé dans une plaque plane, le support peut aussi présenter une section approximativement en forme de C dont l'ouverture est tournée vers l'intérieur du U et dont les bords remplissent la fonction de canalisation de l'air comprimé remplie par les rails 22 dans le mode de réalisation décrit.

Par ailleurs, le préhenseur peut être placé sur un automate de forme quelconque et il peut aussi être équipé d'une poignée permettant sa manutention directe par un opérateur, par exemple dans le cas d'objets particulièrement fragiles ou d'objets dont la manutention directe par la main de l'homme peut être dangereuse (lames de rasoir, ...).

## Revendications

1. Préhenseur pneumatique, qui comprend un support (10) approximativement en forme de U dont une branche d'extrémité (10b) porte une buse d'éjection (12) reliée à une source d'air comprimé (16), caractérisé par le fait que la buse est orientée vers la branche intermédiaire (10a) du support, à proximité d'un coude (10d) reliant cette branche intermédiaire à l'autre branche d'extrémité (10c) du support, ce dernier étant conformé de façon à canaliser l'air comprimé éjecté par la buse (12) vers l'extrémité de l'autre branche d'extrémité (10c).

2. Préhenseur selon la revendication 1, caractérisé par le fait que le support (10) comporte une plaque délimitée latéralement, sur sa face tournée vers l'intérieur du U, et de part et d'autre du coude (10d), par deux rails (22) de guidage de l'air comprimé éjecté par la buse.

## Patentansprüche

1. Pneumatischer Greifer, der einen Träger (10) enthält, ungefähr von der Form eines U, dessen einer Außenschenkel (10b) eine Strahldüse (12) trägt, verbunden mit einer Druckluftquelle (16),

dadurch **gekennzeichnet**,
daß die Druckluftdüse auf den Zwischenschenkel (10a) des Trägers gerichtet ist, in die Nähe einer Biegung (10d), die diesen Zwischenschenkel mit dem anderen Außenschenkel (10c) des Trägers verbindet, wobei letzterer so geformt ist, daß er die von der Düse (12) ausgestrahlte Druckluft kanalisiert bis zum Ende des anderen Außenschenkels (10c).

2. Greifer nach Anspruch 1, dadurch gekennzeichnet, daß der Träger (10) eine Platte enthält, seitlich begrenzt auf ihrer gegen das Innere des U's gekehrten Seite und zu beiden Seiten der Biegung(10d), von zwei Schienen (22) zur Führung der von der Düse ausgestrahlten Druckluft.

**Claims**

1. Pneumatic gripper, which comprises an approximately U-shaped support (10), whereof one end branch (10b) carries an ejection nozzle (12) connected to a compressed air source (16), characterized in that the nozzle is oriented towards the intermediate branch (10a) of the support, in the vicinity of a bend (10d) connecting said intermediate branch to the other end branch (10c) of the support, the latter being shaped so as to channel the compressed air ejected by nozzle (12) towards the end of the other end branch (10c).

2. Gripper according to claim 1, characterized in that the support (10) has a plate, laterally defined on its face turned towards the interior of the U and on either side of the bend (10d) by two rails (22) for guiding the compressed air ejected by the nozzle.

FIG. 1

FIG. 2a

FIG. 2 b